# EUROPEAN PATENT APPLICATION

(11) **EP 2 667 325 A1**
(43) Date of publication of application: **27.11.2013**
(21) Application number: 12168779.2
(22) Date of filing: 22.05.2012
(51) Int. Cl.: G06K 9/00

(54) **Method for determining an analysis region in a camera image, camera system and motor vehicle with a camera system**

(71) Applicant: Connaught Electronics Ltd., Tuam, County Galway (IE); Application Solutions Limited, East Sussex BN7 2AQ (GA)
(72) Inventor: Voros, Robert, Tuam (IE); Hughes, Ciaran, Kinvara (IE); Monteiro, Goncalo, Staines, TW18 2QQ (GB)
(74) Representative: Jauregui Urbahn, Kristian

(57) **Abstract**

The invention relates to a method for determining an analysis region (11) in an image (9) of an environmental region (10) of a motor vehicle (1) captured by means of a camera (3) of the motor vehicle (1) in order to subject the analysis region (11) of the image (9) to image processing by means of an electronic image processing device (4) of the motor vehicle (1). A region of interest (ROI) is defined within the environmental region (10) of the motor vehicle (1) in a three-dimensional coordinate system (x, y, z) of the motor vehicle (1) and projected to a two-dimensional pixel coordinate system (i, j) of the image (9) such that hereby the analysis region (11) in the image (9) is determined.

## Description

The invention relates to a method for determining an analysis region in an image of an environmental region of a motor vehicle captured by means of a camera of the motor vehicle in order to then provide the analysis region of the image to image processing with the aid of an electronic image processing device of the motor vehicle. In addition, the invention relates to a camera system formed for performing such a method as well as a motor vehicle with such a camera system.

Camera systems for motor vehicles are already known from the prior art in diverse configuration. Namely, it is already prior art to attach a camera or a plurality of cameras to a motor vehicle such that the cameras can capture the environment around the motor vehicle. Based on the image data of the cameras, then, very different applications can be provided in the motor vehicle, which support the driver in driving the motor vehicle. Thus, it is for example known to subject the image data of the cameras to an object identification algorithm and to identify the objects located in the environment of the motor vehicle based on the captured images. For example, pedestrians or else other motor vehicles are identified in the images.

Usually, an analysis region is defined in the captured image, which is also known under the designation "region of interest" of the image. Then, exclusively the analysis region of the image is subjected to the respective algorithm - thus the image processing - and not the entire image. On the one hand, this approach reduces the computing time, thus the time required for processing the image; thus, on the other hand, the number of the false positives can also be reduced to a minimum. Usually, as the analysis region of the image, a rectangular region in the two-dimensional pixel coordinate system of the image is defined. However it has turned out that these rectangular analysis regions of the image make relatively little sense with some systems, namely for instance if a non-linear fish eye camera is employed. Namely, the image of such a camera is highly distorted such that the determination of a rectangular analysis region often results in only unsatisfactory results in the image processing.

A further disadvantage of the known camera systems is in that in determining the analysis region in the camera image, it is not taken into account that the position as well as the orientation of the camera relative to the motor vehicle can vary over the lifetime of the vehicle. If an analysis region is defined in the coordinate system of the image, it can occur that in the selected analysis region, it is not imaged the desired environmental region of the motor vehicle, but for instance an adjacent environmental region or even a region of the motor vehicle itself. In the prior art, this results in an increased number of false positives and thus also in an unsatisfactory operation of the camera system.

It is the object of the invention to demonstrate a solution how in a method of the initially mentioned type, the above mentioned disadvantages of the prior art can be avoided.

According to the invention, this object is solved by a method, by a camera system as well as by a motor vehicle having the features according to the respective independent claims. Advantageous configurations of the invention are the subject matter of the dependent claims, of the description and of the figures.

A method according to the invention is configured to determine an analysis region in an image of an environmental region of a motor vehicle captured by means of a camera of the motor vehicle. Then, the analysis region is subsequently subjected to image processing by means of an electronic image processing device of the motor vehicle. In order to determine the analysis region, first, a region of interest (referred to as ROI below) is defined within the environmental region of the motor vehicle, namely in a three-dimensional coordinate system of the motor vehicle, i.e. in the three-dimensional space. Then, the defined ROI is projected to a two-dimensional pixel coordinate system of the image and hereby the analysis region in the image is determined.

Instead of defining the analysis region directly in the two-dimensional pixel coordinate system of the image - thus for instance in the plane of a display - according to the invention, it is proposed to determine the ROI first in the three-dimensional space - in the coordinate system of the motor vehicle - in order to then project this ROI from the three-dimensional coordinate system of the vehicle to the two-dimensional pixel coordinate system of the image. Basically, this approach can be applied in any image processing algorithm such that the method according to the invention is not restricted to a certain image processing algorithm. The defined analysis region can be subjected to different image processing algorithms. The method according to the invention has the advantage that by determining the ROI first in the three-dimensional coordinate system of the motor vehicle, meaningful and usable analysis regions can also be defined for a non-linear fish eye camera. Always that region of the image is processed, which is actually relevant and corresponds to the relevant region of the environment of the motor vehicle. In addition, the method according to the invention also has the advantage that in the projection of the ROI to the two-dimensional pixel coordinate system of the image by the image processing device, the respectively current, determined position and orientation of the camera on the motor vehicle can also be taken into account. Such calibration algorithms serving for determining the current position and orientation of the camera relative to the vehicle, are already prior art and can be used in the projection of the ROI to the pixel coordinate system of the image. The determined analysis region in the image thus always corresponds to the desired, relevant region of the environment of the motor vehicle.

Presently, a mapping of the defined, imagined ROI to an image plane of the camera is understood by the projection. The defined analysis region in the image thus corresponds to an image of the ROI determined in the environmental region of the motor vehicle.

It is particularly preferred if the projection of the ROI to the pixel coordinate system is performed in the operation of the motor vehicle by means of the image processing device. This can for example be effected such that before processing an image or else a temporal sequence of images of the camera, the image processing device first determines the analysis region in the two-dimensional pixel coordinate system, namely by the mentioned projection of the ROI. This embodiment has the advantage that in operation of the motor vehicle, the current position and orientation of the camera can be taken into account in the projection of the ROI. Thus, the number of the false positives can be reduced to a minimum.

Thus, in an embodiment it is provided that the current position and/or orientation of the camera on the motor vehicle is determined by means of the image processing device and is taken into account in projecting the ROI. Therein, for example, the calibration algorithms already known from the prior art can be used, which serve for determining the current position and/or orientation of the camera relative to the motor vehicle. This embodiment thus eliminates the influences of the position variation of the camera on the determination of the analysis region. Namely, the position and/or orientation of the camera can vary over the lifetime of the motor vehicle for example due to deformation of the vehicle body by mechanical effects or else by heat. In the manufacture of the motor vehicle, it can also not be excluded that the real actual position and actual orientation of the camera correspond to the designed desired position as well as to the designed desired orientation. Even a very small offset of the position or of the orientation - about 1 to 2 mm and 1 to 2°, respectively - can result in substantial variation in the image of the camera. In addition, the variation of the position and of the orientation of the camera can also be varied by a load in the motor vehicle or else by the dynamics of the motor vehicle. If the current position and/or orientation of the camera are taken into account in projecting the ROI, thus, corruption of the analysis region due to the variation in the camera position can be prevented. To this, only the calibration algorithm for determining the current position and/or orientation of the camera as well as the knowledge of the camera parameters as well as of the dimensions of the motor vehicle and the originally designed desired position and desired orientation of the camera are required. Usually, this information is present in the form of CAD data.

Also the ROI in the three-dimensional coordinate system of the motor vehicle can be dynamically defined in the operation of the motor vehicle by means of the image processing device. For example, a plurality of ROIs can be stored in the image processing device and the image processing device can each select the optimum ROI. This can be configured such that for different applications - thus for different driver assistance systems - different ROIs are each stored, which can then be selected by means of the image processing device. A further possibility is in defining the ROI in the three-dimensional coordinate system of the motor vehicle depending on sensor data of a sensor of the motor vehicle, namely for example depending on sensor data of an ultrasonic sensor.

It proves particularly advantageous, if a polygonal area, thus an area bounded by several points in the space, is defined as the ROI. Hereby, the ROI can be defined without much computational effort and the stored ROIs additionally take up little storage space. With the aid of a polygonal area, in addition, the respectively relevant, required ROI can be particularly reliably covered.

Preferably, an area with a vertical space component is defined as the ROI. In particular, it can be provided that a vertical area is defined as the ROI, which extends in vehicle vertical direction. Thus, one obtains an analysis region in the two-dimensional pixel coordinate system, which corresponds to the relevant region of the vehicle environment. However, the invention is not restricted to a vertically extending area; an area can also be defined as the ROI, which additionally also has a horizontal space component besides a vertical space component or else extends horizontal.

For example a two-dimensional planar area can be defined as the ROI. This embodiment has the advantage that the computational effort in the projection of the ROI is minimal. Additionally or alternatively, a three-dimensional curved area can also be defined as the ROI. Thus, an analysis region can be defined in the image, which meets the requirements of the respective applications or driver assistance systems. This embodiment basically allows definition of any ROI.

For example, the ROI is defined as a convex area facing the motor vehicle. For example, this can be a cylinder segment-shaped or spherical segment shaped or ellipsoid segment shaped area. This embodiment proves particularly advantageous in particular with a detection algorithm, in which objects are searched in the analysis region of the image, namely in particular pedestrians as well as other vehicles.

As already explained, the analysis region basically can be subjected to any algorithm. For example, the analysis region is subjected to an object identification algorithm, by means of which an object located in the environmental region is identified in the analysis region of the image. For example, here, a pedestrian and/or another vehicle can be identified as the object. Thus, the objects located in the environment of the vehicle can be identified based on the data of the camera and the driver can optionally be warned.

It is particularly preferred if the ROI is defined in the three-dimensional coordinate system such that the analysis region of the image is free of vehicle regions. This means that vehicle parts are preferably not imaged in the analysis region of the image, which could result in false positives in image processing (for example in the detection algorithm). The number of the false positives is therefore reduced to a minimum.

In the three-dimensional coordinate system of the motor vehicle, at least two ROIs can also be defined, and these at least two ROIs can then be projected to the two-dimensional pixel coordinate system of the image as at least two analysis regions, which can be subjected to image processing separately from each other. Thus, the computing time can be further reduced on the one hand. On the other hand, this embodiment also has the advantage that the different ROIs or the different analysis regions of the image each can be subjected to a different algorithm and thus very different algorithms can also be performed at the same time. For example in the so-called "cross traffic alert", at least two ROIs can be defined in total, namely a ROI on the left side and a ROI on the right side of the motor vehicle. These ROIs can then be projected to the coordinate system of the image such that two analysis regions separated from each other are determined in the image in total. The left analysis region can be examined to the effect if an object moves from left to right, while the right analysis region can be examined with respect to the movement of an object from right to left. If this is detected in one of the analysis regions, thus, the driver can be warned about the presence of the object.

The invention also relates to a camera system for a motor vehicle with a camera for capturing an image of an environmental region of the motor vehicle as well as with an electronic image processing device arranged to process an analysis region of the image, i.e. to subject it to an algorithm. The image processing device is also arranged to project a ROI defined in a three-dimensional coordinate system of the motor vehicle to a two-dimensional pixel coordinate system of the image and thus to determine the analysis region in the image by the projection.

A motor vehicle according to the invention includes a camera system according to the invention. The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1: in schematic illustration a motor vehicle with a camera system according to an embodiment of the invention;
- Fig. 2: in schematic and perspective illustration the motor vehicle according to Fig. 1, wherein a ROI is defined in a three-dimensional coordinate system of the motor vehicle;
- Fig. 3: in schematic illustration a projection of the ROI in a two-dimensional pixel coordinate system;
- Fig. 4: in schematic illustration an image of a camera, wherein an analysis region of the image is represented, which is subjected to image processing; and
- Fig. 5: in schematic illustration an image, in which two separate analysis regions are determined.

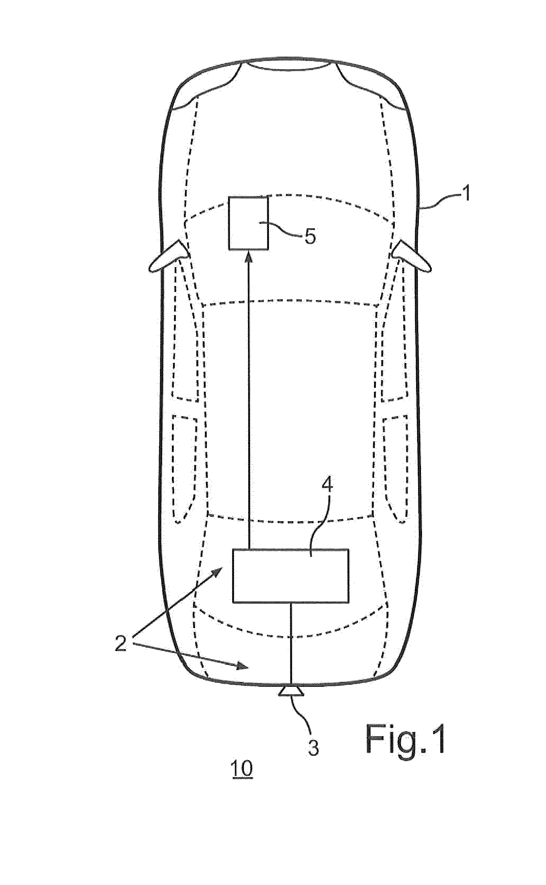

A motor vehicle 1 illustrated in Fig. 1 is for example a passenger car. The motor vesicle 1 has a camera system 2, which serves for supporting the driver in driving the motor vehicle 1. The camera system 2 includes a camera 3 as well as an electronic image processing device 4 as well optional a display 5. The camera 3 is for example a video camera, which can capture a plurality of images per second, thus a temporal sequence of images. The camera 3 is in particular a so-called fish eye camera having a relatively wide capturing angle.

Preferably, the image processing device 4 is a digital signal processor receiving and processing the captured images of the camera 3. These images can then optional be displayed on the display 5, which is disposed in the interior of the motor vehicle 1, namely for example on a center console or else on a dashboard of the motor vehicle 1.

The number as well as the arrangement of the camera 3 is merely exemplarily illustrated in Fig. 1, Plural such cameras 3 can also be employed, which can then for example be disposed also on a lateral side or else in the front region of the motor vehicle 1. Basically, thus, the number as well as the arrangement of the cameras can be arbitrary.

The image processing device 4 can provide very different applications and functionalities, respectively, in the motor vehicle 1. A functionality can for example be the object identification such that the image processing device 4 can identify an object located in the environment of the motor vehicle 1 based on the images. A possible functionary is also the identification of vehicles moving in transverse direction of the motor vehicle 1, which is also known under the designation "cross traffic alert". In all of these applications, the image processing device 4 does not analyze the entire images, but at least a partial region of the images respectively, the so-called analysis region. Presently, the interest is in the determination of such an analysis region in the images of the camera 3.

It is provided that before the analysis region in the image is determined, first, a region of interest ROI is defined in the three-dimensional coordinate system x,y,z of the motor vehicle 1, wherein x denotes the vehicle longitudinal direction, y denotes the vehicle transverse direction and z denotes the vehicle vertical direction. Therefore, this coordinate system can be a Cartesian coordinate system. A plurality of such ROI can be stored in the image processing device 4 already in the development of the camera system 2, and the image processing device 4 can then select one of the stored ROI in the operation of the motor vehicle 1. This is in particular configured such that the image processing device 4 selects the respective ROI depending on the provided functionality. However, it can also be provided that the ROI is dynamically defined in the operation of the motor vehicle 1, for instance depending on sensor data of a sensor.

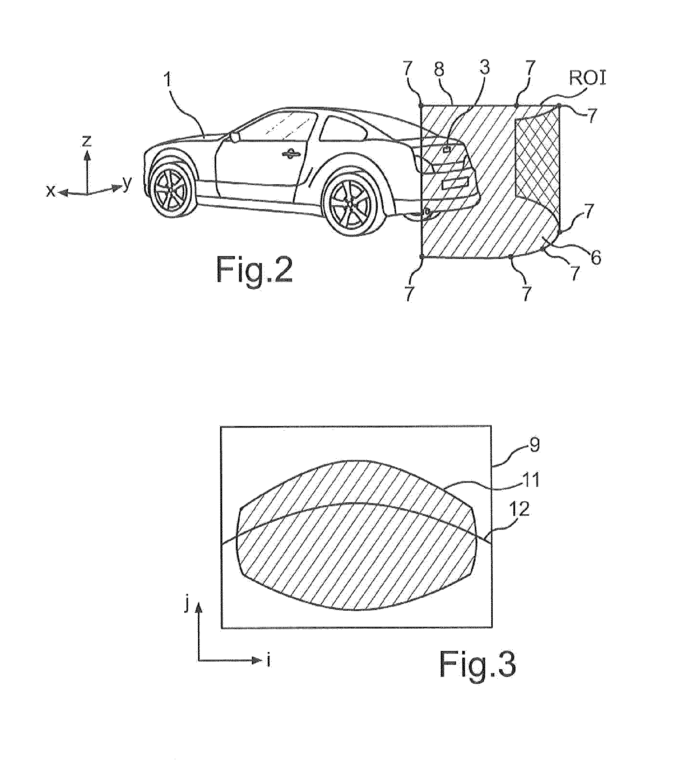

An example for a ROI is illustrated in more in Fig. 2. Here, the ROI is a polygonal area 6 extending in vertical direction, thus in vehicle vertical direction z, in the embodiment. The ROI exemplarily illustrated in Fig. 2 is also a three-dimensional curved area 6, which additional is formed convex with respect to the motor vesicle 1. Here, the area 6 additional has the shape of a cylinder segment, the longitudinal axis of which extends in vehicle vertical direction z.

Such an area 6 as it is exemplarily illustrated in Fig. 2 can for example be defined by individual points 7, which bound the area 6. Basically, the resolution of the points 7 can be selected arbitrarily fine; however, an average resolution has proven sufficient. A line 8 connecting the points 7 thus represents an outer boundary - i.e, the contour - of the area 6.

However, the invention is not restricted to such a ROI illustrated in Fig. 2. The shape of the ROI here is only exemplarily illustrated, Thus, the ROI can for example also be defined by a planar, two-dimensional area or else by a spherical segment-shaped or else an ellipsoid segment-shaped area.

Now, the ROI is projected to the two-dimensional pixel coordinate system i,j of the camera 3 by means of the image processing device 4. An exemplary image 9 of an environmental region 10 of the motor vehicle 1 is illustrated in Fig. 3. In the pixel coordinate system i,j of the image 9, an analysis region 11 is determined, which has been defined by a projection of the three-dimensional ROI to the two-dimensional pixel coordinate system i,j. Thus, the analysis region 11 represents an image of the ROI in the captured image 9 of the camera 3. In Fig. 3, in the image 9, the projection of a horizontal line 12 is additionally illustrated, which is represented distorted in the image 9 due to the fish eye characteristics of the camera 3.

At this point it is to be noted that the analysis region 11 illustrated in Fig. 3 is not displayed on the display 5, but only represents an imagined region of the image 9, which is subjected to image processing by means of the image processing device 4.

In the projection of the ROI to the pixel coordinate system i,j of the camera 3, the image processing device 4 preferably also considers the current position as well as orientation of the camera 3 on the motor vehicle 1. Namely, they can vary over the lifetime of the motor vehicle 1, namely due to very different influences. So-called calibration algorithms, which are already prior art, serve for determining the current position and orientation of the camera 3 relative to a designed desired position and desired orientation, respectively. These calibration algorithms now can also be taken into account in the projection of the ROI to the image 9.

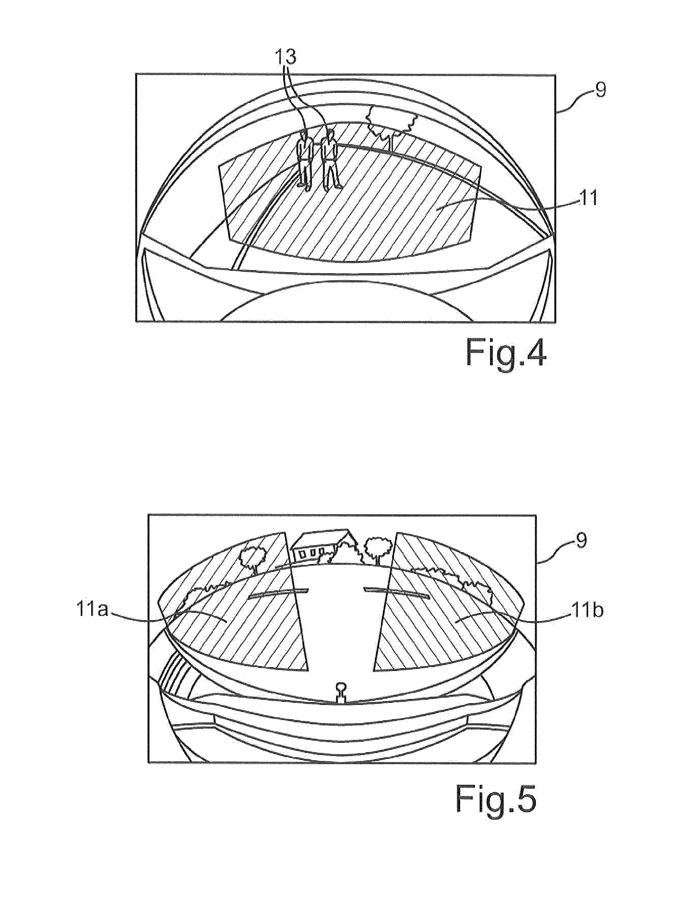

In Fig. 4, an exemplary image 9 with an exemplary analysis regions 11 is illustrated. As is apparent from Fig. 4, the ROI and thus also the analysis region 11 can be selected such that vehicle parts are not within the analysis region 11 in the image 9. Namely, vehicle regions are also imaged in edge regions in the image 9, which optionally could result in a false result in the image processing. In order to avoid this, the ROI is defined considering CAD data of the motor vehicle 1 such that the analysis region 11 is free of such vehicle regions. This analysis region 11 illustrated in Fig. 4 now can for example be subjected to the object identification algorithm, and pedestrians 13 can be identified

A further exemplary image 9 of the camera 3 is illustrated in Fig. 5. In this embodiment, the image processing device 4 serves as a so-called cross traffic alert system, by means of which vehicles moving in transverse direction y of the vehicle 1 can be detected and reported to the driver. On the right of the motor vehicle, here, a first ROI can be defined, while a second ROI can be determined on the left side of the motor vehicle 1. In the image 9, this corresponds to a left analysis region 11a on the one hand and a right analysis region 11b on the other hand. Thus, two different analysis regions 11a, 11b are determined in the image 9, which are examined with respect to the movement of another vehicle independently of each other. The image processing device 4 now examines if other motor vehicles move from left to right in the left analysis region 11a. In contrast, in the right analysis region 11b, the image processing device 4 examines if another motor vehicle moves from right to left. If this is identified, thus, the driver is warned about the risk of collision, for instance in acoustic and/or haptic and/or optical manner.

## Claims

1. Method for determining an analysis region (11) in an image (9) of an environmental region (10) of a motor vehicle (1) captured by means of a camera (3) of the motor vehicle (1) in order to subject the analysis region (11) of the image (9) to image processing by means of an electronic image processing device (4) of the motor vehicle (1),
**characterized by** the following steps:
- defining a region of interest (ROI) within the environmental region (10) of the motor vehicle (1) in a three-dimensional coordinate system (x, y, z) of the motor vehicle (1), and
- projecting the defined region of interest (ROI) to a two-dimensional pixel coordinate system (i, j) of the image (9) and hereby determining the analysis region (11) in the image (9).

2. Method according to claim 1,
**characterized in that**
the projection of the region of interest (ROI) to the pixel coordinate system (i, j) is performed in the operation of the motor vehicle (1) by means of the image processing device (4).

3. Method according to claim 1 or 2,
**characterized in that**
the current position and/or orientation of the camera (3) on the motor vehicle (1) is determined and taken into account in projecting by means of the image processing device (4).

4. Method according to anyone of the preceding claims,
**characterized in that**
a polygonal area (6) is defined as the region of interest (ROI).

5. Method according to anyone of the preceding claims,
**characterized in that**
an area (6) with a vertical space component (z), in particular a vertically extending area (6), is defined as the region of interest (ROI).

6. Method according to anyone of the preceding claims,
**characterized in that**
a two-dimensional planar area (6) is defined as the region of interest (ROI),

7. Method according to anyone of the preceding claims,
**characterized in that**
a three-dimensional curved area (6) is defined as the region of interest (ROI).

8. Method according to anyone of the preceding claims,
**characterized in that**
a convex area (6) facing the motor vehicle (1) is defined as the region of interest (ROI),

9. Method according to anyone of the preceding claims,
**characterized in that**
a cylinder segment-shaped or spherical segment-shaped or ellipsoid segment-shaped area (6) is defined as the region of interest (ROI).

10. Method according to anyone of the preceding claims,
**characterized in that**
the analysis region (11) is subjected to an object identification algorithm, by means of which an object (13) located in the environmental region (10) is identified in the analysis region (11) of the image (9).

11. Method according to anyone of the preceding claims,
**characterized in that**
the region of interest (ROI) is defined such that the analysis region (11) of the image (9) is free of vehicle regions.

12. Method according to anyone of the preceding claims,
**characterized in that**
at least two regions of interest (ROI) are defined in the three-dimensional coordinate system (x, y, z) of the motor vehicle (1) and are projected to the two-dimensional pixel coordinate system (i, j) of the image (9) as at least two analysis regions (11a, 11b), which are subjected to image processing separately from each other.

13. Camera system (2) for a motor vehicle (1), with a camera (3) for capturing an image (9) of an environmental region (10) of the motor vehicle (1) and with an electronic image processing device (4), which is arranged to process an analysis region (11) of the image (9),
**characterized in that**
the image processing device (4) is arranged to project a region of interest (ROI) defined in a three-dimensional coordinate system (x, y, z) of the motor vehicle (1) to a two-dimensional pixel coordinate system (i, j) of the image (9) and hereby to determine the analysis region (11) in the image (9).

14. Motor vehicle (1) with a camera system (2) according to claim 13.
